# EUROPEAN PATENT SPECIFICATION

(11) **EP 2 044 552 B1**
(45) Date of publication and mention of the grant of the patent: **14.11.2012**
(21) Application number: 07719230.0
(22) Date of filing: 11.05.2007
(51) Int. Cl.: B23K 26/14, B41M 5/26, F41A 21/22, F41A 35/00, F42B 33/14, B44C 1/22, G06K 1/12, G09F 7/16

(54) **METHOD AND DEVICE FOR PROTECTION AND CONTROL OF ORIGINALITY OF PRODUCTS AND ELECTRONICALLY READABLE CERTIFICATE THEREOF**
VERFAHREN UND EINRICHTUNG FÜR SCHUTZ UND KONTROLLE DER ORIGINALITÄT VON PRODUKTEN UND ELEKTRONISCH LESBARES ZERTIFIKAT DAFÜR
PROCÉDÉ ET DISPOSITIF POUR LA PROTECTION ET LE CONTRÔLE DE L'ORIGINALITÉ DE PRODUITS ET LEUR CERTIFICAT LISIBLE ÉLECTRONIQUEMENT

(30) Priority: 11.05.2006 BG 10954106
(43) Date of publication of application: 08.04.2009
(73) Proprietor: Keit Ltd., 1712 Sofia (BG); Zhelev, Zhivko, 1712 Sofia (BG); Zhelev, Arkadiush, 1712 Sofia (BG)
(72) Inventor: ZHELEV, Zhivko, 1712 Sofia (BG); ZHELEV, Arkadiush, 1712 Sofia (BG)
(74) Representative: Varbanov, Julian Ivanov
(86) International application number: PCT/BG2007/000008
(87) International publication number: WO 2007/131307

(56) References cited:
- EP-A- 1 223 053
- WO-A-00/57336
- WO-A-00/74889
- WO-A-99/05636
- BG-B1- 63 518
- US-A- 3 805 067
- US-A1- 2004 159 641

## Description

### TECHNICAL SCOPE OF THE INVENTION

The invention relates to a method for protecting the originality of marked products against attempts for erasure or manipulation of the marking.

### BACKGROUND OF THE INVENTION

EP 1 223 053 discloses a method for applying an identification number onto an engine block of a motor vehicle, which provides for the applying in addition to the original identification number a second, tamper-proof identification number coded with a cipher key and written in the form of a barcode or DATA-MATRIX-CODES applied to a defined location on the engine block or a part of the engine block. The original identification number is applied in a deep 3D structure which varies in its depth. The deep structure is produced by way of material ablation and/or material deposition, in particular deposition welding, preferably by means of a laser. The depth of the deep structure varies in sinusoidal fashion and also varies within an alphanumeric digit sequence of the identification number. The said method provides for the alphanumeric characters of the identification number be configured in the form of a plurality of lines and the identification number is applied with a manipulation-proof inscription, in particular in the manner of OCR-A or OCR-B.
The additional identification number is applied onto a functional surface of a component of the engine a manipulation and/or removal of the additional identification number will render the component non-functional.

There are also other known methods for numbering and control of the originality of the products by means of marking, laser engraving, mechanical numbering, multimedia multi-stage encrypted markings, etc. The prior art methods are complemented with deferent certificates, which common control is carried out by bare eye, tools or automatic readers.
The disadvantages of the above stated methods are that in case of mechanical numbering or laser engraving it is not possible to distinguish the original from the fake one if an exact replica, so called cloning, of the original marking and certificate is done and the multi-stage encrypted marking itself is not immune against erasure or in case a deep removal of the encrypted marking is done it is impossible to determine its uniqueness.

### TECHNICAL DESCRIPTION OF THE INVENTION

The goal of the invention is to achieve a method for protecting the originality of marked products against attempts for erasure or manipulation of the marking, more specifically in the control of production, control of weapons, firearms and their spare parts and ammunitions, automobiles and automotive industry, aircraft industry, machine-building industry and other products for tracking purpose, control of their and of their components originality, proof of their origin and producer as well as control of the originality of their certificate which can be accomplished although the exact replication, imitation, cloning or erasure of the deposited marking is tried to be made.

The goal is achieved by means of the method according to claim 1.

### DESCRIPTION OF THE FIGURES

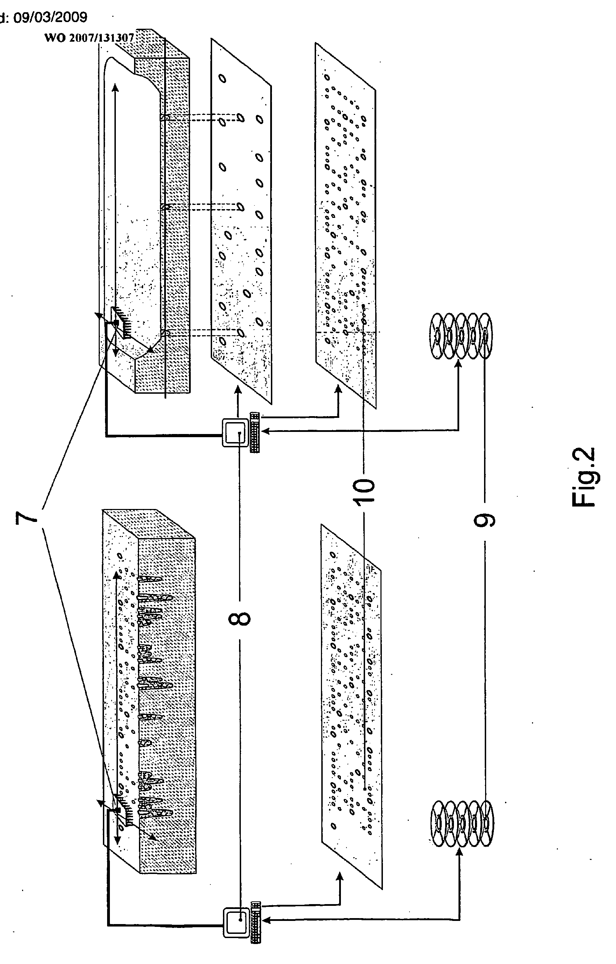

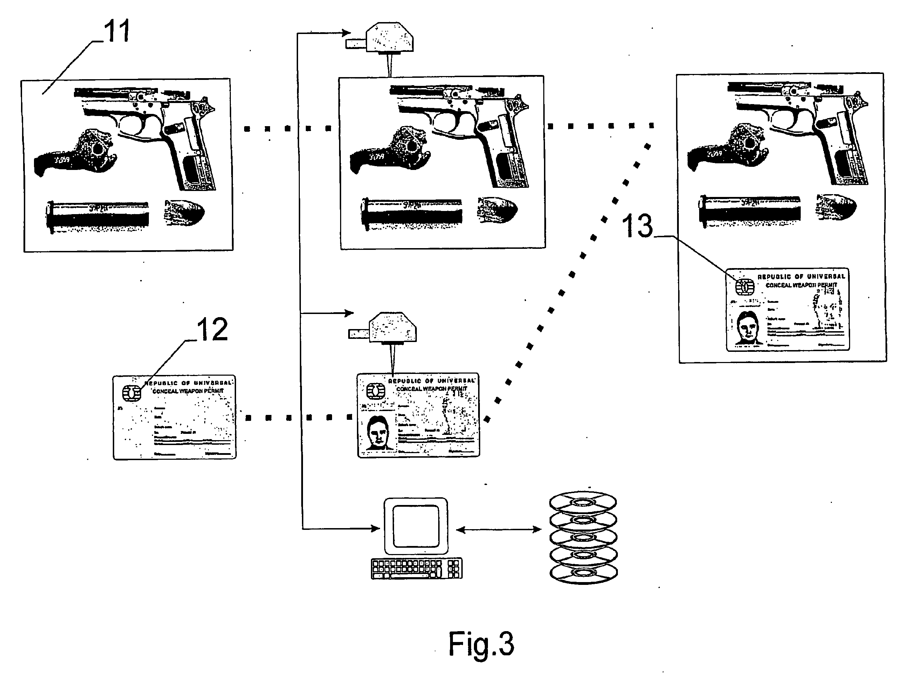

The invention is illustrated by the following figures:

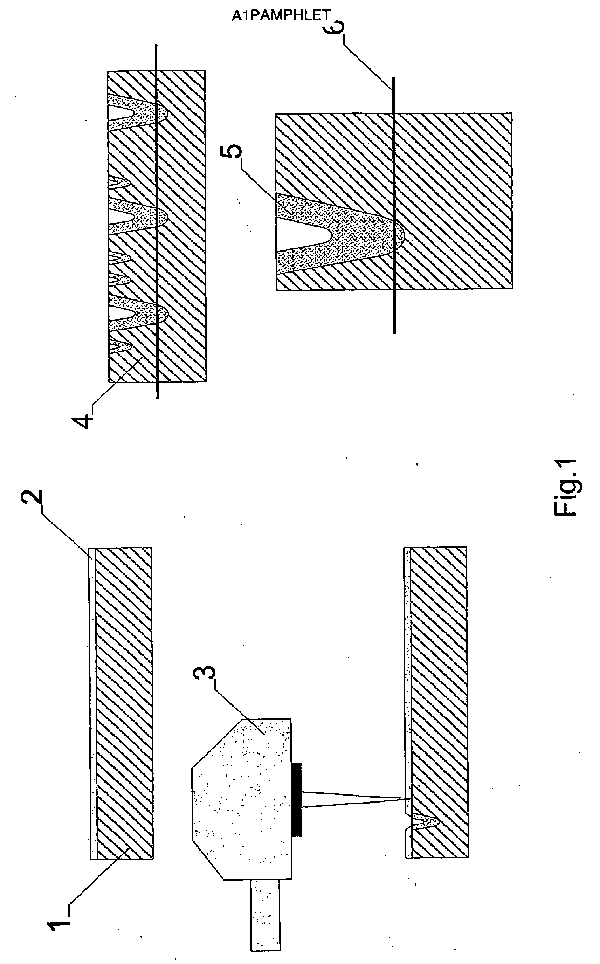

Figure 1 - deposition of the restorable multi-stage encrypted markings
   1. product
   2. alloy layer
   3. controlled beam (a laser, an electron beam, an ionic beam, etc.)
   4. restorable multi-stage encrypted marking
   5. altered structure of the material.
   6. critical depth line
Figure 2 - reading of the restorable multi-stage encrypted markings
   7. reader (CCD, AFM, CMOS, etc.)
   8. computer
   9. database
   10. multi-stage encrypted marking
Figure 3 - recording and reading of multi-stage encrypted marking restorable after attempts for erasure or manipulation for protecting the originality of products and the accompanying certificates.
   11. product
   12. certificate with the electronic carrier.
   13. the restorable multi-stage encrypted marking over the certificate and the electronic carrier.

### PREFERRED EMBODIMENT OF THE INVENTION

Over a product depending on its structure is deposited a thin alloying layer that is different for the different materials. During the process of marking that is carried out by a controlled beam (a laser beam, an electron beam, an ionic beam, etc), because of the raise of the temperature, the elements of the alloy layer penetrate deep into the material of the product over which the multi-stage encrypted marking is being recorded and simultaneously alter the structure of the material round and into the points of the marking. By means of the control and the adjustment of the power of the marking beam, the thickness and the type of the alloy layer, the structure's alteration of the material and the depth of the penetration are controlled at the specific encoding points of the marking in such a way that they will be deeper into the structure of the material of the product than the critical depth where in case of so deep mechanical material removal, i.e. erasure of the marking, the product will be destroyed or its utilization made impossible. The reading and control of so-accomplished markings, which can be restored in case of the attempts of their erasure or cloning, is carried out by scanning with the reader (CCD, AFM, CMOS or other) the surface, the conductivity and the structure of the material in the area of the marking or, in case of erasure, in the area where the marking was recorded. The so-acquired image and parameters are eventually processed and then are compared with the parameters of the encoding elements recorded into the database when the original marking was done. The database contains the relation between original marking and the encoding elements in it. If the acquired parameters match those recorded in the database the marking can be restored if it is erased and its originality can be proven. During the marking of the product the relation between the visible original marking and the hidden encoding elements is recorded on the accompanying electronically readable certificate. After that the chip of the certificate and the material of the certificate are marked in the same way with the restorable multi-stage encrypted markings which protect the certificate against manipulation and counterfeit. The certificate then, after its originality is proven by the markings on it, can be utilized in a process of control of the marking recorded over the corresponding product as the certificate contains the relation between the visible original marking and hidden encoding elements.

## Claims

1. Method for protecting the originality of products being marked with a marking against attempts at erasure or manipulation of the marking, the method comprising:
a) depositing a thin alloy layer (2) on a surface of a product (1) in a marking area;
the method being **characterized by** further comprising:
b) recording in the marking area a multi-stage encryption marking using a controlled beam or jet beam (3) in such a way that elements of the alloy layer penetrate deep into a material of the product and alter the structure of the material (5) deeper than a critical depth (6) at which in case of mechanical material removal of the marking, the product will be destroyed or its utilization made impossible;
c) scanning by means of a reader (7) the surface, the structure and the conductivity of the material in the marking area, thereby acquiring parameters thereof;
d) recording the parameters in a database (9);
e) after attempt at erasure or manipulation of the markings, scanning by means of a reader (7) the surface, the structure and the conductivity of the material in the marking area, thereby acquiring further parameters thereof, and comparing the further parameters with the parameters recorded in the database (9) to prove the originality of the product.

## Patentansprüche

1. Verfahren zum Schutz der Originalität von Produkten die mit einer Markierung gegen Versuche zur Löschung oder Manipulation der Markierung versehen sind, **gekennzeichnet durch**:
a) auftragen einer dünnen Legierungsschicht (2) auf der Oberfläche eines Produkts (1) in einem Markierungsbereich:
wobei das Verfahren ferner wie folgt gekennzeichnet wird:
b) aufzeichnen, in dem Markierungsbereich, einer mehrstufig verschlüsselten Markierung mit Hilfe eines kontrollierten Strahls oder Düsenstrahls (3) in solcher Weise, dass Elemente der Legierungsschicht tief in das Material des Produktes eindringen und die Struktur des Materials (5) tiefer als eine kritische Tiefe (6) verändern, bei der im Falle einer mechanischen Materialabtragung der Markierung, das Produkt zerstört oder dessen Nutzung unmöglich gemacht wird;
c) abtasten mittels eines Lesegeräts (7) der Oberfläche, der Struktur und der Leitfähigkeit des Materials im Markierungsbereich, wobei Parameter erfasst warden;
d) aufzeichnen der Parameter in einer Datenbank (9);
e) nach einem Versuchzur Löschung oder Manipulation der Markierungen, abtasten mittels eines Lesegeräts (7) der Oberfläche, der Struktur und der Leitfähigkeit des Materials im Markierungsbereich, wobei weitere Parameter desselben erfasst werden, und Vergleichen der Parameter mit den Parametern aufgezeichnet in der Datenbank (9), um die Originalität des Produktes nachzuweisen.

## Revendications

1. Procédé pour protéger l'originalité de produits étant marqués avec un marquage contre les tentatives de l'effacement ou la manipulation du marquage, le procédé comprenant:
a) dépôt d'une mince couche d'alliage (2) sur une surface d'un produit (1) dans une zone de marquage:
le procédé étant caractérisé en comprenant en outre:
b) l'enregistrement dans la zone de marquage d'un marquage crypté en plusieurs niveau en utilisant un faisceau de marquage contrôlé ou du faisceau jet (3) de telle manière que les éléments de la couche d'alliage pénétrera profondément dans le matériau du produit en modifiant la structure du matériau (5) et notamment plus profond que la profondeur critique (6) a laquelle en cas d'enlèvement de façon mécanique du matériel du marquage, le produit sera détruit ou son utilisation deviendra impossible;
c) balayer au moyen d'un lecteur (7) de la surface, la structure et la conductivité du matériau dans la zone de marquage, acquérant ainsi des paramètres de celui-ci;
d) enregistrer les paramètres dans une base de données (9);
e) après tentative d'effacement ou de manipulation des marquages, le balayage au moyen d'un lecteur (7) de la surface, la structure et la conductivité du matériau dans la zone de marquage, de ce fait l'acquisition d'autres paramètres de celui-ci, et en comparant les paramètres supplémentaires avec le paramètres enregistrés dans la base de données (9) de prouver l'originalité du produit.
